# FASCICULE DE BREVET EUROPEEN

(11) **EP 0 706 255 B1**
(45) Date de publication et mention de la délivrance du brevet: **02.12.1998**
(21) Numéro de dépôt: 95115537.3
(22) Date de dépôt: 02.10.1995
(51) Int. Cl.: H02K 5/14

(54) **Machine électrique tournante à collecteur, notamment moteur électrique à courant continu**
Kommutatorelektrische Maschine, insbesondere Gleichstromelektromotor
Rotating electric machine with commutator, in particular DC electric motor

(30) Priorité: 04.10.1994 FR 9411929
(43) Date de publication de la demande: 10.04.1996
(73) Titulaire: VALEO SYSTEMES D'ESSUYAGE, 78321 La Verrière (FR)
(72) Inventeur: Blanchet, Pierre, F-86140 Lencloitre (FR)
(74) Mandataire: Gamonal, Didier

(56) Documents cités:
- EP-A- 0 148 702
- EP-A- 0 236 254

## Description

La présente invention concerne une machine électrique tournante à collecteur comme un moteur électrique à courant continu.

Elle se rapporte plus particulièrement à une machine électrique dans laquelle il existe un moyen de retenu temporaire des charbons pour faciliter l'assemblage de ladite machine.

Dans l'état de la technique, une telle machine comporte généralement un collecteur fixé sur l'arbre du rotor de ladite machine et tournant autour de l'axe de rotation dudit rotor. Il est constitué par une pluralité de lames conductrices en un métal conducteur, en cuivre notamment, séparées par des interstices garnis d'un isolant.

Ladite machine comporte également une plaque porte-charbons munie de logements, disposés sensiblement radialement, et destinés à recevoir des charbons, réalisés en un matériau électriquement conducteur, en graphite notamment. Lesdits charbons sont montés dans les logements avec des ressorts de façon à être repoussés vers le collecteur, une fois la plaque porte-charbons installée sur la machine électrique tournante.

Le ressort agissant de façon permanente dès que le charbon est installé dans son logement, il faut trouver un moyen pour bloquer son éjection sur la face de sortie du logement avant que le collecteur ait été disposé face à lui. Il est de plus important de trouver un moyen de retenu des charbons qui puisse permettre d'automatiser le montage d'une telle machine.

Il a déjà été proposé de disposer des anneaux permettant de boucher l'orifice des logements de charbons, avant la mise en place desdits charbons et de leur ressort sur la machine électrique tournante.

Le document EP-B-0 236 254 divulgue notamment une machine électrique comportant un porte-balais muni de logements pour des balais et d'une section déplaçable ayant la forme d'une rondelle adaptée de manière à maintenir les balais dans les logements dans une position de montage. Cette rondelle est placée de telle sorte qu'elle soit rencontrée par une partie du collecteur pendant l'insertion de l'arbre du rotor à travers le porte-balais de manière à déplacer ladite rondelle pour libérer les balais de façon à ce qu'ils viennent en contact avec le collecteur.

Un inconvénient de ce dispositif vient du fait que la rondelle est reliée de manière intégrale au porte-balais par l'intermédiaire de pattes pouvant être rompues. En effet, au moment du déplacement de ladite rondelle, des fragments ou la totalité de la rondelle peuvent tomber à l'intérieur de la machine électrique, risquant ensuite d'en altérer le fonctionnement ou de créer des bruits intempestifs dus aux déplacements desdits fragments à l'intérieur de la machine.

Le document EP-B-0 148 702 résout en partie ce problème en décrivant un moteur électrique comportant un organe de retenue temporaire des charbons formé par une bague, portant deux languettes axiales destinées à obturer lesdits logements dans une première position, et montée déplaçable à rotation entre ladite première position et une deuxième position dans laquelle les charbons sont libérés. Ledit organe de retenu comporte un crochet, destiné à le rendre solidaire axialement de la plaque porte-charbons, et un doigt d'entraînement permettant de l'amener dans sa position de libération des charbons.

Cependant cet organe de retenu présente l'inconvénient de compliquer la plaque porte-charbons puisque celle-ci doit comporter, en supplément par rapport à une plaque ordinaire, une glissière avec laquelle coopère le crochet. D'autre part, ledit organe de retenue est une pièce supplémentaire qui n'a aucune utilité par la suite pour le moteur électrique.

Un but principal de la présente invention est de résoudre les problèmes précités.

A cet effet, la présente invention a pour objet une machine électrique tournante à collecteur comme un moteur électrique à courant continu, exempte des inconvénients de la technique antérieure.

La machine électrique tournante à collecteur, selon l'invention, notamment un moteur électrique à courant continu, comprend une carcasse dans laquelle est disposé un inducteur, un induit, solidaire d'un arbre lié à ladite carcasse au moyen de deux paliers et portant également un collecteur, ladite machine comprenant également un porte-charbons portant des charbons logés dans des logements, lesdits charbons étant sollicités radialement par des moyens élastiques, et un organe de retenue temporaire des charbons qui, dans une première position obture, au moins en partie, les ouvertures internes desdits logements en maintenant les charbons dans une position effacée et qui, dans une deuxième position libère les charbons pour qu'ils viennent en contact avec le collecteur, ledit organe de retenue étant adapté à être rencontré par une partie de l'induit pendant l'insertion de l'arbre du rotor axialement à travers le porte-charbons, caractérisée en ce que l'organe de retenue comporte des premiers et seconds moyens d'immobilisation en translation par rapport au porte-charbon pour être maintenu dans la première ou la deuxième position.

Grâce à l'invention, l'organe de retenue temporaire des charbons est immobilisé dans la machine électrique, une fois le montage de celle-ci terminé. Il ne risque donc pas de vibrer et de provoquer des bruits intempestifs lors du fonctionnement de ladite machine.

Selon un autre aspect de l'invention, les moyens d'immobilisation de l'organe de retenue dans la première et la deuxième position par rapport au porte-charbons sont constitués par des moyens à coopération de forme.

Selon un autre aspect de l'invention, les moyens à coopération de forme sont formés par au moins deux encoches pratiquées sur ledit organe de retenue et coopérant avec une partie du porte-charbons, chaque encoche correspondant à une position d'immobilisation.

Selon un autre aspect de l'invention, l'organe de retenue est constitué par un disque annulaire comportant un alésage central et se prolongeant axialement par au moins deux pattes.

Selon un autre aspect de l'invention, l'organe de retenue comporte trois pattes s'étendant axialement.

Ce nombre de trois pattes assure le meilleur compromis entre la flexibilité de l'organe de retenue et sa stabilité.

Selon un autre aspect de l'invention, les encoches constituant les moyens d'immobilisation temporaire de l'organe de retenue sont disposées sur les pattes dudit organe de retenue.

Cette disposition sur les pattes est la disposition préférée de l'invention car la flexibilité desdites pattes permet un engagement et un désengagement rapide des encoches.

Selon un autre aspect de l'invention, les encoches sont disposées sur le côté des pattes tourné vers l'extérieur de l'organe de retenue.

Selon un autre aspect de l'invention, le porte-charbons de ladite machine est constitué par une plaque portant les charbons et un support de ladite plaque, la plaque et le support comportant un alésage central pour le passage de l'arbre et du collecteur du rotor, et les encoches de l'organe de retenue coopèrent avec la bordure de l'alésage dudit support en ayant un profil complémentaire de celui de ladite bordure.

Ainsi, la seule modification à apporter au porte-charbon de la machine selon l'invention concerne le profil de l'alésage central de ce dernier, ce qui n'en complique pas la conception par rapport à un porte-charbons classique.

Selon un autre aspect de l'invention, les encoches ont un profil sensiblement en forme de V. Ceci facilite l'engagement et le désengagement des encoches sans trop forcer sur les pattes de l'organe de retenue ce qui écarte le risque de cassure desdites pattes.

Selon un autre aspect de l'invention, le diamètre du disque annulaire est supérieur à celui du collecteur et inférieur à celui de l'alésage du porte-charbons.

Selon un autre aspect de l'invention, le diamètre de l'alésage de l'organe de retenue est sensiblement supérieur à celui de l'arbre du rotor de ladite machine. Ainsi, ledit organe de retenue ne gêne pas le mouvement de l'arbre.

Selon un autre aspect de l'invention, l'organe de retenue est adapté de manière à servir de déflecteur pour empêcher le lubrifiant du palier d'atteindre les charbons ou le collecteur de ladite machine. Ainsi, l'organe de retenue est une pièce utile dans la machine même lorsque le montage de celle-ci est terminé.

D'autres caractéristiques et avantages de l'invention ressortiront de la description détaillée qui suit pour la compréhension de laquelle, on se référera aux dessins annexés parmi lesquels:
- la figure 1 est composée de deux demi-vues en coupe d'un moteur électrique représenté, dans la demi-vue inférieure, au cours de son montage, et dans la demi-vue supérieure, une fois le montage terminé;
- la figure 2 est une vue en coupe représentant un détail du moteur électrique de la figure 1, à un stade intermédiaire de son montage;
- la figure 3 est une vue en coupe représentant le même détail dudit moteur qu'à la figure précédente, lorsque le montage du moteur est terminé;
- la figure 4 est une vue en perspective de l'organe de retenue des charbons de l'invention;
- la figure 5 est une vue de dessus du porte-charbons du moteur réalisé selon l'invention.

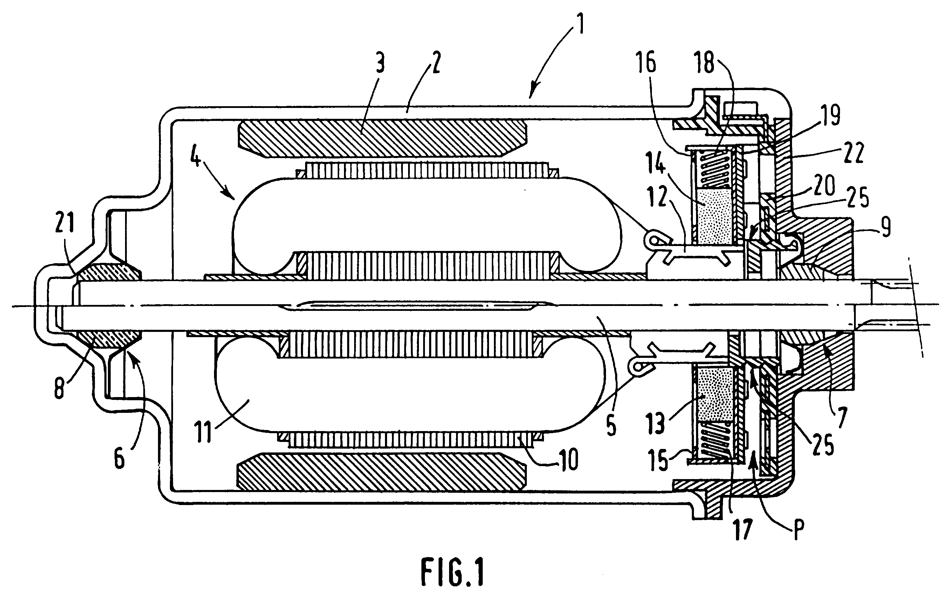

Sur la figure 1, on a représenté une machine électrique tournante à deux stades de son montage. Dans la demi-vue inférieure, en considérant l'orientation de la figure 1, elle est représentée à un stade intermédiaire du montage, tandis que dans le demi-vue supérieure, elle est représentée terminée.

La machine électrique tournante de la figure 1 est un moteur électrique 1 comportant une carcasse 2 sur laquelle sont fixées des ferrites 3 pour former le stator dudit moteur, ladite carcasse étant fermée par un couvercle 22. Un rotor 4 formant l'induit est monté tournant dans ladite carcasse au moyen de deux paliers 6 et 7 traversés par l'arbre 5 dudit rotor et constitués avantageusement par des rotules 8 et 9.

Le rotor 4 comprend un paquet de tôles 10 autour duquel sont bobinés des enroulements 11 dont les extrémités sont fixées, notamment par soudage, sur les lamelles d'un collecteur 12, ledit collecteur étant fixé sur l'arbre 5 dudit rotor.

Des charbons 13 et 14 sont disposés dans des guides 15 et 16, en étant poussés par des ressorts 17 et 18. Les guides desdits charbons sont portés par un porte-charbons P constitué d'une plaque 19 sur laquelle sont montés les guides, ladite plaque 19 étant portée par un support 20.

Une pièce 25 constituant l'organe de retenue des charbons de l'invention est représentée, dans la demi-vue inférieure de la figure 1, en position de maintien des charbons, empêchant le charbon 13 de sortir du guide 15 et permettant l'introduction du collecteur 12 entre les charbons. Dans la demi-vue supérieure, l'organe de retenue 25 est représenté dans sa position finale lorsque le montage du moteur est terminé.

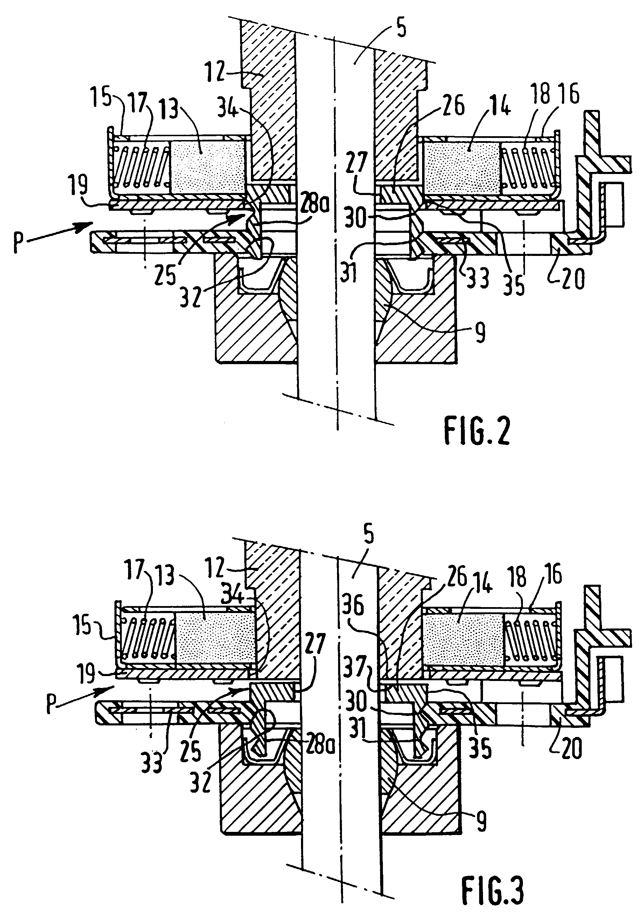

Pour la suite de la description, on se reportera aux figures 2 et 3 dans lesquelles les éléments similaires à ceux de la figure 1 portent les mêmes numéros et ne seront pas décrits plus avant.

Sur la figure 2, on a représenté le porte-charbons P au moment de l'introduction de l'induit dans ledit porte-charbons, l'organe 25 de retenu des charbons étant encore dans une position de blocage desdits charbons.

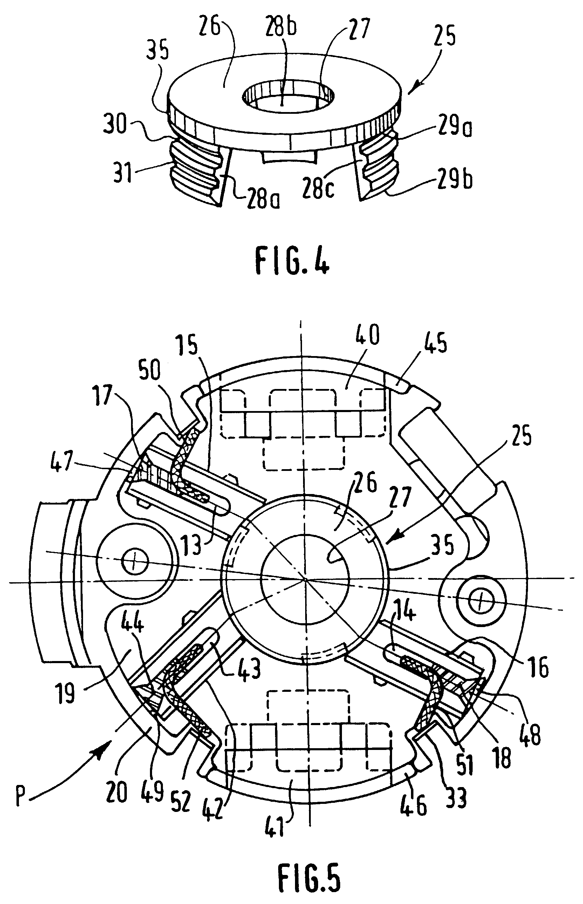

L'organe de retenue 25, réalisé préférentiellement en matière plastique, est constitué, comme mieux visible à la figure 4, d'un disque 26 percé d'un alésage 27, destiné au passage de l'arbre 5 du rotor et de diamètre sensiblement supérieur à celui dudit arbre 5 pour ne pas gêner le mouvement de ce dernier. Le disque 26 est de diamètre sensiblement supérieur à celui du collecteur 12.

Ledit disque 26 se prolonge axialement, dans une direction perpendiculaire à la surface dudit disque, par des pattes 28a, 28b, 28c, préférentiellement au nombre de trois, ayant la forme générale de portions de cylindre, et qui sont, dans l'exemple de réalisation décrit, de largeur plus importante sur leur côté 29a se rattachant au disque 26 que sur leur côté 29b libre.

Les pattes 28a-28c dudit organe de retenue comportent chacune deux encoches 30 et 31, situées sur la partie dirigée vers l'extérieur des portions de cylindre, le profil desdites encoches étant sensiblement en forme de V. Ces encoches sont adaptées à coopérer avec un alésage central 32 pratiqué sur le support 20 du porte-charbons P et le profil des encoches est complémentaire de celui dudit alésage 32.

En se référant à la figure 2, l'organe de retenue 25 est positionné de telle sorte que chaque encoche 31, celle située du côté libre de chaque patte, coopère avec l'alésage 32 du support 20 du porte-charbons, de manière à immobiliser axialement ledit organe de retenue par rapport au porte-charbons, dans une première position.

La hauteur des pattes 28a-28c additionnée de l'épaisseur du disque 26 est choisie supérieure à l'épaisseur du porte-charbons P prise au niveau de son alésage central 32, 34, et l'épaisseur du disque 26 de l'organe de retenue est supérieure à l'épaisseur de la plaque 19 du porte-charbons additionnée de l'épaisseur du guide 15, 16.

Le porte-charbons P est constitué, comme on l'a vu précédemment par un support 20, réalisé en un matériau isolant, surmoulé sur un circuit 33 constitué de pistes métalliques de raccordement électrique, et par une plaque 19, également en matériau isolant, percée d'un alésage 34 pour le passage du collecteur et de l'arbre 5 du rotor, ledit alésage 34 étant de diamètre sensiblement supérieur à celui du collecteur 12.

Les deux éléments constitutifs du porte-charbons P, la plaque 19 et le support 20, sont assemblés par l'intermédiaire de blocs amortisseurs (représentés en pointillés 40, 41 à la figure 5) selon un procédé qui n'est pas concerné ici par l'invention.

La plaque 19 porte des guides 15, 16 de forme générale tubulaire, disposés sensiblement radialement comme mieux visible sur la figure 5, dans lesquels des charbons 13, 14 sont adaptés à coulisser, poussés par des ressorts 17, 18.

Dans la première position occupée par l'organe de retenue 25 à la figure 2, lors du montage du moteur, le disque 26 est disposé de telle sorte que sa périphérie 35 soit en contact avec les charbons 13, 14 en les maintenant à l'intérieur des guides 15, 16. Il est à noter que pour réaliser cette fonction, le diamètre du disque 26 de l'organe de retenue 25 doit être sensiblement inférieur à celui de l'alésage 34 de la plaque 19 du porte-charbons P, de manière à pouvoir pénétrer dans ledit alésage, et ledit diamètre doit être supérieur à celui du collecteur 12 pour que ledit collecteur puisse être glissé entre les charbons sans être gêné par ceux-ci.

A la figure 2, on a d'ailleurs représenté le collecteur 12 dans une position intermédiaire lors du montage du moteur, position dans laquelle il est glissé entre les charbons sans entrer en contact avec eux ni avec l'organe de retenue 25.

A la figure 3, tous les éléments représentés sont similaires à ceux de la figure 2, seule la position relative de certains éléments a été modifiée.

Les éléments sont ici représentés dans leur position finale, une fois le montage du moteur terminé.

L'organe de retenue 25 est disposé de telle sorte que ce soient les encoches 30, celles situées du côté des pattes 28a-28c se raccordant au disque 26, qui coopèrent avec l'alésage 32 du support 20, pour immobiliser axialement ledit organe de retenue dans une deuxième position, plus basse que la première en considérant le bas du moteur du côté de la rotule 9.

Dans cette deuxième position, l'organe de retenue 25 n'est plus en contact avec le collecteur 12, ni avec les charbons 13, 14, qui n'étant plus retenus, sont en appui sur le collecteur 12 poussés par les ressorts 17, 18. Il existe en particulier un espace entre la surface 36, située à la base du collecteur, et la surface 37 du disque 26 dudit organe de retenue. Ainsi, il n'y a aucun frottement entre le collecteur et l'organe de retenue.

De plus, comme celui-ci est immobilisé sur le porte-charbons, il ne risque pas de vibrer, comme cela était souvent le cas dans l'art antérieur, et donc il ne provoque pas de bruit intempestif.

L'organe 25 sert également, dans cette position finale, de déflecteur pour les projections de lubrifiant provenant de la rotule. En effet, le diamètre de l'alésage 27 du disque 26, constituant la partie supérieure de l'organe de retenue 25, étant légèrement supérieur au diamètre de l'arbre 5, ledit disque 26 empêche pratiquement tout lubrifiant de la rotule de venir polluer les lames du collecteur ou les charbons. Ainsi, l'organe de retenue 25 est une pièce utile au fonctionnement du moteur, une fois le montage de ce dernier réalisé.

A la figure 5, on a représenté le porte-charbons P tel qu'il est obtenu avant d'être inséré dans le moteur. Les éléments similaires à ceux des figures précédentes portent les mêmes numéros de référence et ne seront pas décrits plus avant.

Le porte-charbons P est constitué, comme on l'a vu précédemment, d'un support 20 et d'une plaque 19, tous deux en matériau isolant. La plaque 19 porte trois éléments tubulaires 15, 16, 42 servant à guider des charbons 13, 14, 43 poussés par des ressorts 17, 18, 44.

Dans l'exemple de réalisation, la plaque 19 porte trois charbons pour que le moteur puisse tourner à deux vitesses possibles, suivant l'alimentation des charbons, comme cela est connu en soi.

On décrira dans la suite le procédé de montage du porte-charbons de la figure 5 et du moteur complet de la figure 1, en se référant à l'ensemble des figures décrites.

Lors du montage du porte-charbons, les guides 15, 16, 42 sont d'abord fixés sur la plaque 19, par exemple au moyen de languettes, venues de matière avec lesdits guides et repliées dans des orifices correspondants de la plaque 19, puis la plaque 19, pourvue de ses guides, est assemblée sur le support 20 grâce à des blocs amortisseurs 40, 41.

Chaque bloc amortisseur 40, 41 est glissé radialement dans des ouvertures pratiquées sur des secteurs cylindriques 45, 46 venus de matière avec le support 20, ledit amortisseur venant coincer le bord de la plaque 19 disposée sur le support, de manière à immobiliser celle-ci axialement et radialement par rapport au support.

Dans la suite du montage du porte-charbons, on fait glisser l'organe de retenue 25 dans l'alésage 34 de la plaque 19, jusqu'à ce que les encoches 31, pratiquées dans les pattes 28a-28c, viennent coopérer avec la bordure de forme complémentaire de l'alésage 32 du support 20. Dans cette première position, le disque 26 dudit organe de retenue dépasse au dessus de la surface supérieure de la plaque 19 (celle qui est visible à la figure 5), de manière à venir obturer, en partie, les orifices internes de sortie des guides 15, 16, 42, orientés du côté du centre du porte-charbons.

Il est à noter que grâce à sa forme, l'organe de retenue 25 ne nécessite pas d'indexation angulaire pour son montage, car chaque encoche peut coopérer avec n'importe qu'elle partie de la bordure de l'alésage 32, ce qui facilite l'automatisation dudit montage.

On glisse ensuite les charbons 13, 14, 43 dans les guides 15, 16, 42, en les faisant entrer par les ouvertures disposées du côté de la périphérie du porte-charbons, jusqu'à ce qu'ils viennent buter sur l'organe de retenue 25. On dispose à la suite les ressorts 17, 18, 44 dans lesdits guides puis les languettes 47, 48, 49 de fermeture des guides sont repliées, à angle droit par rapport à la plaque 19, de manière à venir presser les ressorts contre les charbons.

Les charbons comportent des tresses 50, 51, 52 de raccordement électrique qui sont ensuite soudées au circuit électrique 33 inclus dans le support 20.

A ce stade du montage, on dispose d'un porte-charbons terminé conforme à celui représenté à la figure 5.

Dans la suite du montage du moteur, on fixe par un moyen connu, par exemple à l'aide de vis, ledit porte-charbons sur le couvercle 22 de fermeture de la carcasse 2 dudit moteur.

On procède ensuite au montage de l'induit du moteur, dont l'assemblage a été réalisé préalablement. Pour cela, on introduit l'arbre 5, muni du paquet de tôles 10, des enroulements 11 et du collecteur 12, dans l'alésage 27 du disque de l'organe de retenue 25.

Le mouvement se poursuit axialement de telle sorte que la surface 36, située à la base du collecteur, rencontre la surface 37 du disque 26 de l'organe de retenue, et que la force exercée par l'appui dudit collecteur sur ladite surface 37 provoque le désengagement des encoches 31, pratiquées dans les pattes de l'organe de retenue 25, du bord de l'alésage 32 du support, et le glissement dudit organe de retenue vers la rotule 9. Ce mouvement est rendu possible grâce à la flexibilité des pattes 28a-28c dudit organe de retenue, qui évite ainsi tout risque de cassure dudit organe.

L'organe de retenue est ensuite immobilisé dans sa deuxième position lorsque les encoches 30 des pattes 28a-28c atteignent l'alésage 32 et coopèrent avec son bord. Les charbons sont ainsi libérés et viennent en appui sur le collecteur sous la poussée des ressorts 17, 18, 44.

On règle ensuite la position axiale de l'induit pour que la surface 36 du collecteur n'appuie pas sur la surface 37 de l'organe de retenue. Ainsi, on évite tout frottement entre les deux surfaces qui pourraient provoquer du bruit ou freiner le mouvement de l'induit.

La carcasse 2 du moteur, dans laquelle on a préalablement fixé les ferrites 3, par agrafage ou collage, et monté la rotule 8 dans un logement 21 pratiqué dans le fond de ladite carcasse, vient ensuite entourer l'induit pour être fixée au couvercle de fermeture 22, par exemple au moyen de vis.

Le moteur ainsi réalisé selon l'invention est donc particulièrement simple à assembler de manière automatique.

Bien entendu, la présente invention n'est pas limitée à l'exemple de réalisation décrit ci-dessus mais englobe toutes variantes.

Notamment, l'organe de retenue peut comporter seulement deux pattes munies d'encoches, ou au contraire en comporter un nombre supérieur à trois. D'autre part, les encoches peuvent présenter un profil autre que le profil en V décrit dans la réalisation ci-dessus, par exemple un profil en U.

## Revendications

1. Machine électrique tournante à collecteur, notamment moteur électrique à courant continu, comprenant une carcasse (2) dans laquelle est disposé un inducteur (3), un induit (4), solidaire d'un arbre (5) lié à ladite carcasse au moyen de deux paliers (6, 7) et portant également un collecteur (12), ladite machine comprenant également un porte-charbons (P) portant des charbons (13, 14, 43) logés dans des logements (15, 16, 42), lesdits charbons étant sollicités radialement par des moyens élastiques (17, 18, 44), et un organe de retenue temporaire des charbons (25) qui, dans une première position obture, au moins en partie, les ouvertures internes desdits logements en maintenant les charbons dans une position effacée et qui, dans une deuxième position libère les charbons pour qu'ils viennent en contact avec le collecteur, ledit organe de retenue (25) étant adapté à être rencontré par une partie (36) de l'induit pendant l'insertion de l'arbre du rotor axialement à travers le porte-charbons, caractérisée en ce que l'organe de retenue (25) comporte des premiers et seconds moyens d'immobilisation (30, 31) en translation par rapport au porte-charbon (P) pour être maintenu dans la première ou la deuxième position.

2. Machine électrique tournante selon la revendication 1, caractérisée en ce que les moyens d'immobilisation (30, 31) de l'organe de retenue (25) dans la première et la deuxième position par rapport au porte-charbons (P) sont constitués par des moyens à coopération de forme.

3. Machine électrique tournante selon la revendication 2, caractérisée en ce que les moyens à coopération de forme sont formés par au moins deux encoches (30, 31) pratiquées sur ledit organe de retenue et coopérant avec une partie (32) du porte-charbons (P), chaque encoche correspondant à une position d'immobilisation.

4. Machine électrique tournante selon l'une des revendications précédentes, caractérisée en ce que l'organe de retenue (25) est constitué par un disque annulaire (26) comportant un alésage central (27) et se prolongeant axialement par au moins deux pattes (28a, 28b).

5. Machine électrique tournante selon la revendication 4, caractérisée en ce que l'organe de retenue (25) comporte trois pattes (28a-28c) s'étendant axialement.

6. Machine électrique tournante selon l'une des revendications 3, 4 ou 5, caractérisée en ce que les encoches (30, 31) constituant les moyens d'immobilisation temporaire de l'organe de retenue (25) sont disposées sur les pattes (28a-28c) dudit organe de retenue.

7. Machine électrique tournante selon la revendication 6, caractérisée en ce que les encoches (30, 31) sont disposées sur le côté des pattes (28a-28c) tourné vers l'extérieur de l'organe de retenue (25).

8. Machine électrique tournante selon l'une des revendications 3 à 6, caractérisée en ce que le porte-charbons (P) de ladite machine est constitué par une plaque (19) portant les charbons et un support (20) de ladite plaque, la plaque et le support comportant un alésage central (32, 34) pour le passage de l'arbre (5) et du collecteur (12) du rotor, et en ce que les encoches (30, 31) de l'organe de retenue coopèrent avec la bordure de l'alésage (32) dudit support (20) en ayant un profil complémentaire de celui de ladite bordure.

9. Machine électrique tournante selon l'une des revendications 3 à 8, caractérisée en ce que les encoches (30, 31) ont un profil sensiblement en forme de V.

10. Machine électrique tournante selon l'une des revendications 4 à 9, caractérisée en ce que le diamètre du disque annulaire (26) est supérieur à celui du collecteur (12) et inférieur à celui de l'alésage (34) du porte-charbons.

11. Machine électrique tournante selon l'une des revendications 4 à 10, caractérisée en ce que le diamètre de l'alésage (27) de l'organe de retenue est sensiblement supérieur à celui de l'arbre (5) du rotor de ladite machine.

12. Machine électrique tournante selon l'une des revendications précédentes, caractérisée en ce que l'organe de retenue (25) est adapté de manière à servir de déflecteur pour empêcher le lubrifiant du palier (7) d'atteindre les charbons (13, 14, 43) ou le collecteur (12) de ladite machine.

## Claims

1. A rotary electrical machine with a commutator, in particular a direct current electric motor, comprising a carcase (2) in which are disposed an inductor (3), an armature (4) fixed on a shaft (5), which is connected to the said carcase by means of two bearings (6, 7) and which also carries a commutator (12), the said machine further including a brush holder (P) carrying carbon brushes (13, 14, 43) mounted in housings (15, 16, 42), the said carbon brushes being biased radially by resilient means (17, 18, 44), and a temporary retaining member (25) for the carbon brushes, which, in a first position, obturates at least partly the internal apertures of the said housings, holding the carbon brushes in an effaced position, and which in a second position releases the carbon brushes so that they come into contact with the commutator, the said retaining member being adapted to be met by a portion (36) of the armature during insertion of the shaft of the rotor axially through the brush holders, characterised in that the retaining member (25) includes first and second means for immobilisation against straight line movement with respect to the brush holder (P), so as to be maintained in the first or the second position.

2. A rotary electrical machine according to Claim 1, characterised in that the means for immobilising the retaining member (25) in the first and the second position with respect to the brush holder (P) consist of mating means.

3. A rotary electrical machine according to Claim 2, characterised in that the mating means are defined by at least two notches (30, 31) formed in the said retaining member and cooperating with a portion (32) of the brush holder (P), with each notch corresponding to one immobilising position.

4. A rotary electrical machine according to one of the preceding Claims, characterised in that the retaining member (25) consists of an annular disc (26) having a central through hole (27) and being extended axially by at least two lugs (28a, 28b).

5. A rotary electrical machine according to Claim 4, characterised in that the retaining member (25) has three axially extending lugs (28a - 28c).

6. A rotary electrical machine according to one of Claims 3, 4 and 5, characterised in that the notches (30, 31) constituting the temporary immobilising means for the retaining member (25) are disposed on the lugs (28a - 28c) of the said retaining member.

7. A rotary electrical machine according to Claim 6, characterised in that the notches (30, 31) are disposed on the side of the lugs (28a - 28c) facing towards the outside of the retaining member (25).

8. A rotary electrical machine according to one of Claims 3 to 6, characterised in that the brush holder (P) of the said machine comprises a plate (19) carrying the carbon brushes and a support (20) for the said plate, the plate and the support including a central bore (32, 34) for the passage through it of the shaft (5) and the commutator (12) of the rotor, and in that the notches (30, 31) of the retaining member cooperate with the edge of the bore (32) of the said support (20), having a profile complementary to that of the said edge.

9. A rotary electrical machine according to one of Claims 3 to 8, characterised in that the notches (30, 31) have a substantially V-shaped profile.

10. A rotary electrical machine according to one of Claims 4 to 9, characterised in that the diameter of the annular disc (26) is greater than that of the commutator (12) and smaller than that of the bore (34) of the brush holder.

11. A rotary electrical machine according to one of Claims 4 to 10, characterised in that the diameter of the through hole (27) in the retaining member is substantially greater than that of the shaft (5) of the rotor of the said machine.

12. A rotary electrical machine according to one of the preceding Claims, characterised in that the retaining member (25) is adapted so as to serve as a deflector for preventing the lubricant for the bearing (7) reaching the carbon brushes (13, 14, 43) or the commutator (12) of the said machine.

## Patentansprüche

1. Kommutatorelektrische Maschine, insbesondere Gleichstromelektromotor, umfassend ein Gehäuse (2), in dem eine Erregerwicklung (3) und ein Anker (4) angeordnet sind, der fest an einer Welle (5) angebracht ist, die mittels zweier Lager (6, 7) mit dem besagten Gehäuse verbunden ist und auch einen Kommutator (12) trägt, wobei die besagte Maschine außerdem einen Kohlebürstenhalter (P) umfaßt, der Kohlebürsten (13, 14, 43) trägt, die in Aufnahmen (15, 16, 42) eingesetzt sind, wobei die besagten Kohlebürsten radial durch elastische Mittel (17, 18, 44) beaufschlagt werden, sowie ein Organ zum zeitweiligen Festhalten der Kohlebürsten (25), das in einer ersten Position zumindest teilweise die inneren Öffnungen der besagten Aufnahmen verschließt, wobei es die Kohlebürsten in einer versenkten Position hält, und das in einer zweiten Position die Kohlebürsten freigibt, damit sie mit dem Kommutator in Kontakt kommen, wobei das besagte Halteorgan so gestaltet ist, daß während des Einsetzens der Welle des Läufers axial durch den Kohlebürstenhalter ein Teil (36) des Ankers auf es trifft, **dadurch gekennzeichnet**, daß das Halteorgan (25) erste und zweite Mittel zur Sicherung gegen Verschiebung im Verhältnis zum Kohlebürstenhalter (P) umfaßt, um in der ersten oder der zweiten Position gehalten zu werden.

2. Elektrische Maschine nach Anspruch 1, **dadurch gekennzeichnet**, daß die Mittel zur Sicherung des Halteorgans (25) in der ersten Position und der zweiten Position im Verhältnis zum Kohlebürstenhalter (P) aus formschlüssig zusammenwirkenden Mitteln bestehen.

3. Elektrische Maschine nach Anspruch 2, **dadurch gekennzeichnet** daß die formschlüssig zusammenwirkenden Mittel durch mindestens zwei Ausklinkungen (30, 31) gebildet werden, die an dem besagten Halteorgan eingearbeitet sind und mit einem Teil (32) des Kohlebürstenhalters (P) zusammenwirken, wobei jede Ausklinkung einer Sicherungsposition entspricht.

4. Elektrische Maschine nach einem der vorangehenden Ansprüche, **dadurch gekennzeichnet**, daß das Halteorgan (25) aus einer ringförmigen Scheibe (26) besteht, die eine mittige Bohrung (27) umfaßt und durch mindestens zwei Ansätze (28a, 28b) verlängert wird.

5. Elektrische Maschine nach Anspruch 4, **dadurch gekennzeichnet**, daß das Halteorgan (25) drei Ansätze (28a-28c) umfaßt, die sich axial erstrecken.

6. Elektrische Maschine nach einem der Ansprüche 3, 4 oder 5, **dadurch gekennzeichnet**, daß die Ausklinkungen (30, 31), die die Mittel zur zeitweiligen Sicherung des Halteorgans (25) bilden, auf den Ansätzen (28a-28c) des besagten Halteorgans angeordnet sind.

7. Elektrische Maschine nach Anspruch 6, **dadurch gekennzeichnet**, daß die Ausklinkungen (30, 31) auf der Seite der Ansätze (28a-28c) angeordnet sind, die zur Außenseite des Halteorgans (25) gerichtet ist.

8. Elektrische Maschine nach einem der Ansprüche 3 bis 6, **dadurch gekennzeichnet**, daß der Kohlebürstenhalter (P) der besagten Maschine aus einer Platte (19), die die Kohlebürsten trägt, und einer Halterung (20) der besagten Platte besteht, wobei die Platte und die Halterung eine mittige Bohrung (32, 34) für den Durchgang der Welle (5) und des Kommutators (12) des Läufers umfassen, und daß die Ausklinkungen (30, 31) des Halteorgans mit der Umrandung der Bohrung (32) der besagten Halterung (20) zusammenwirken, wobei sie ein Profil haben, das formschlüssig mit dem der besagten Umrandung ausgeführt ist.

9. Elektrische Maschine nach einem der Ansprüche 3 bis 8, **dadurch gekennzeichnet**, daß die Ausklinkungen (30, 31) ein in etwa V-förmiges Profil haben.

10. Elektrische Maschine nach einem der Ansprüche 4 bis 9, **dadurch gekennzeichnet**, daß der Durchmesser der ringförmigen Scheibe (26) größer als derjenige des Kommutators (12) und kleiner als derjenige der Bohrung (34) des Kohlebürstenhalters ist.

11. Elektrische Maschine nach einem der Ansprüche 4 bis 10, **dadurch gekennzeichnet**, daß der Durchmesser der Bohrung (27) des Halteorgans etwas größer als derjenige der Welle (5) des Läufers der besagten Maschine ist.

12. Elektrische Maschine nach einem der vorangehenden Ansprüche, **dadurch gekennzeichnet**, daß das Halteorgan (25) so gestaltet ist, daß es als Abscheider dient, um das Schmiermittel des Lagers (7) daran zu hindern, die Kohlebürsten (13, 14, 43) oder den Kommutator (12) der besagten Maschine zu erreichen.
